# EUROPEAN PATENT APPLICATION

(11) **EP 4 443 451 A2**
(43) Date of publication of application: **09.10.2024**
(21) Application number: 24164502.7
(22) Date of filing: 19.03.2024
(51) Int. Cl.: H01G 4/012, H01G 4/008, H01G 4/12, H01G 4/232, H01G 4/30

(54) **MULTILAYER CERAMIC CAPACITOR HAVING PROTRUDING INTERNAL ELECTRODES AT THE INTERFACE WITH THE EXTERNAL ELECTRODE**

(30) Priority: 05.04.2023 KR 20230045008
(71) Applicant: Samsung Electro-Mechanics Co., Ltd., Suwon-si, Gyeonggi-do 16674 (KR)
(72) Inventor: Lee, Taekjung, Suwon-si, Gyeonggi-do 16674 (KR); Oh, Beomseock, Suwon-si, Gyeonggi-do 16674 (KR); Lee, Hojun, Suwon-si, Gyeonggi-do 16674 (KR); Kim, Hyuntaek, Suwon-si, Gyeonggi-do 16674 (KR); Kim, Oknam, Suwon-si, Gyeonggi-do 16674 (KR); Kang, Sunghyung, Suwon-si, Gyeonggi-do 16674 (KR)
(74) Representative: Grünecker Patent- und Rechtsanwälte PartG mbB

(57) **Abstract**

A multilayer capacitor (100), comprising a capacitor body (110) comprising a first internal electrode (121) and a second internal electrode (122) alternately stacked while being spaced apart from each other, and a dielectric layer (111) interposing the first internal electrode (121) and the second internal electrode (122), wherein:

- the first internal electrode (121), the second internal electrode (122), and the dielectric layer (113) are stacked in a first direction (X), and the capacitor body (110) includes a first surface and a second surface facing the first surface in a second direction (Z) perpendicular to the first direction (X), and first and second external electrodes (130, 140) connected to the first internal electrode (121) and the second internal electrode (122), respectively, and the first and second external electrodes (130, 140) are disposed on the first surface and the second surface, respectively, wherein:

- the first internal electrode (121) comprises a first end portion protruding from the first surface by 0.5 µm to 5 µm, and wherein:

- the second internal electrode (122) comprises a second end portion protruding from the second surface by 0.5 µm to 5 µm.

## Description

### BACKGROUND

### (a) Technical Field

The present disclosure relates to a multilayer capacitor.

### (b) Description of the Related Art

Multilayer capacitors are chip-type capacitors that are mounted on printed circuit boards of various electronic products such as video devices, computers, smart phones, and mobile phones to charge or discharge electricity.

Such a multilayer capacitor may be used as a component of various electronic devices due to its small size, high capacitance, and ease of mounting. Recently, as components of electronic devices have been miniaturized, demand for miniaturization and high capacitance of multilayer capacitors has increased.

The micro-multilayer capacitor has a problem in that the exposed area of the internal electrode is narrow, resulting in a poor contact between the internal electrode and the external electrode and a decrease in capacity.

### SUMMARY

The present disclosure attempts to provide a multilayer capacitor capable of enhancing bonding strength between the internal electrode and the external electrode, reducing contact failure, and preventing capacity degradation of the capacitor.

However, the objective of the present disclosure is not limited to the aforementioned one, and may be extended in various ways within the spirit and scope of the present disclosure.

A multilayer capacitor includes a capacitor body including a first internal electrode and a second internal electrode alternately stacked while being spaced apart from each other, and a dielectric layer interposing the first internal electrode and the second internal electrode, where the first internal electrode, the second internal electrode, and the dielectric layer are stacked in a first direction, and the capacitor body includes a first surface and a second surface facing the first surface in a second direction perpendicular to the first direction, and first and second external electrodes connected to the first internal electrode and the second internal electrode, respectively, and the first and second external electrodes may be disposed on the first surface and the second surface, respectively, where the first internal electrode may include a first end portion protruding from the first surface by 0.5 µm to 5 µm, and where the second internal electrode may include a second end portion protruding from the second surface by 0.5 µm to 5 µm.

The first end portion and the second end portion may be disposed to be offset from each other in the second direction of the capacitor body and alternately protrude from first and second surfaces of the capacitor body, respectively.

A first external electrode may be electrically connected to the first end portion, and the second external electrode may be electrically connected to the second end portion.

The first external electrode may include, a first conductive layer disposed on the first surface and connected to the first internal electrode, and a first internal plating layer disposed to cover the first conductive layer, the second external electrode may include a second conductive layer disposed on the second surface and connected to the second internal electrode, and a second internal plating layer disposed to cover the first conductive layer.

The capacitor body may further include a third surface and a fourth surface facing each other in the first direction. The first conductive layer may include a first connection portion located on the first surface and connected to the first end portion, and a first band portion extending to at least a portion of the third surface. The second conductive layer may include a second connection portion located on the second surface and connected to the second end portion, and a second band portion extending to at least a portion of the third surface.

The first external electrode may further include a first external plating layer disposed to cover the first internal plating layer. The second external electrode may further include a second external plating layer disposed to cover the second internal plating layer.

The first end portion and the second end portion may include a plating layer.

The plating layer may include at least one of nickel (Ni), copper (Cu), tin (Sn), and palladium (Pd).

A surface roughness of the capacitor body is in a range of 0.2 µm to 1 µm.

A thickness of the capacitor body in the first direction is smaller than or equal to 150 µm.

Each of the first and second internal electrodes includes a plurality of internal electrodes.

The capacitor body may have a preset thickness in the first direction, a preset length in the second direction, and a preset width in a third direction perpendicular to the first direction and the second direction, and
The preset thickness of the capacitor body may be smaller than the preset width.

A method of manufacturing a multilayer capacitor including a capacitor body including a first internal electrode and a second internal electrode alternately stacked while being spaced apart from each other, where the capacitor body includes a first surface and a second surface opposing the first surface, the method includes etching a portion of the first surface so that a first end portion of the first internal electrode protrudes from the first surface.

The etching may be laser etching.

The etching may be chemical etching.

The method may further include etching a portion of the second surface so that a second end portion of the second internal electrode protrudes from the second surface.

The method may further include applying a conductive paste including metal to the first surface and the second surface, and firing the conductive paste to form an external electrode.

According to a multilayer capacitor according to an embodiment, bonding strength between the internal electrode and the external electrode may be enhanced, contact failure may be reduced, and capacity degradation of the capacitor may be prevented.

### BRIEF DESCRIPTION OF THE DRAWINGS

FIG. 1 is a perspective view schematically showing a multilayer capacitor according to an embodiment.
FIG. 2A and FIG. 2B are exploded perspective views showing first and second internal electrodes applied to the multilayer capacitor of FIG. 1.
FIG. 3 is a cross-sectional view taken along line III-III' in FIG. 1.
FIG. 4 is an enlarged cross-sectional view of a portion A in FIG. 3.
FIG. 5 is an enlarged cross-sectional view of a portion B in FIG. 3.

### DETAILED DESCRIPTION

The present disclosure will be described more fully hereinafter with reference to the accompanying drawings, in which embodiments of the disclosure are shown. The drawings and description are to be regarded as illustrative in nature and not restrictive. Like reference numerals designate like elements throughout the specification. In addition, some constituent elements are exaggerated, omitted, or briefly illustrated in the added drawings, and sizes of the respective constituent elements do not reflect the actual sizes.

The accompanying drawings are provided only in order to allow embodiments disclosed in the present specification to be easily understood and are not to be interpreted as limiting the spirit disclosed in the present specification, and it is to be understood that the present disclosure includes all modifications, equivalents, and substitutions without departing from the scope and spirit of the present disclosure.

Terms including an ordinal number, such as first, second, etc., may be used to describe various elements, but the elements are not limited by the terms. The terms are only used to differentiate one constituent element from other constituent elements.

It will be understood that when an element such as a layer, film, region, area, or substrate is referred to as being "on" or "above" another element, it can be directly on the other element or intervening elements may also be present. In contrast, when an element is referred to as being "directly on" another element, there are no intervening elements present. Further, in the specification, the word "on" or "above" means disposed on or below the object portion, and does not necessarily mean disposed on the upper side of the object portion based on a gravitational direction.

Throughout the specification, it should be understood that the term "include", "comprise", "have", or "configure" indicates that a feature, a number, a step, an operation, a constituent element, a part, or a combination thereof described in the specification is present, but does not exclude a possibility of presence or addition of one or more other features, numbers, steps, operations, constituent elements, parts, or combinations, in advance. Unless explicitly described to the contrary, the word "comprise" and variations such as "comprises" or "comprising" will be understood to imply the inclusion of stated elements but not the exclusion of any other elements.

Further, throughout the specification, the phrase "in a plan view" or "on a plane" means viewing a target portion from the top, and the phrase "in a cross-sectional view" or "on a cross-section" means viewing a cross-section formed by vertically cutting a target portion from the side.

Furthermore, throughout the specification, "connected" does not only mean when two or more elements are directly connected, but also when two or more elements are indirectly connected through other elements, and when they are physically connected or electrically connected, and further, it may be referred to by different names depending on a position or function, and may also be referred to as a case in which respective parts that are substantially integrated are linked to each other.

Hereinafter, when directions in connection with the capacitor body 110 are defined in order to clearly describe the embodiment of the present disclosure, x, y, and z indicated in the drawings represent a length direction, a width direction, and a thickness direction of the capacitor body 110, respectively.

Here, the z-axis direction (the thickness direction) may be a direction perpendicular to the wide surface (main surface) of the sheet-shaped components, and may be used as the same concept as the stacking direction in which the dielectric layers 111 are stacked, for example. An x-axis direction (the length direction) is a direction extending in parallel to the wide surface (main surface) of the sheet-like component, and may be a direction generally perpendicular to a z-axis direction (the thickness direction), of which an example may be a direction, along which first and second external electrodes 130 and 140 are located at both ends. A W-axis direction (the width direction) is a direction extending in parallel to the wide surface (main surface) of the sheet-like component, and may be a direction generally perpendicular to the z-axis direction (the thickness direction) and the x-axis direction (the length direction). A length of the sheet-like component in the length direction (a L-axis direction) may be larger than a width of in the width direction (the W-axis direction).

Therefore, a first direction along which a dielectric layer 111 and first and second internal electrodes 121 and 122 are stacked may be the z-axis direction (the thickness direction), and a second direction and a third direction that are perpendicular to the first direction and also perpendicular to each other may be the x-axis direction (the length direction) and a y-axis direction (the width direction), respectively.

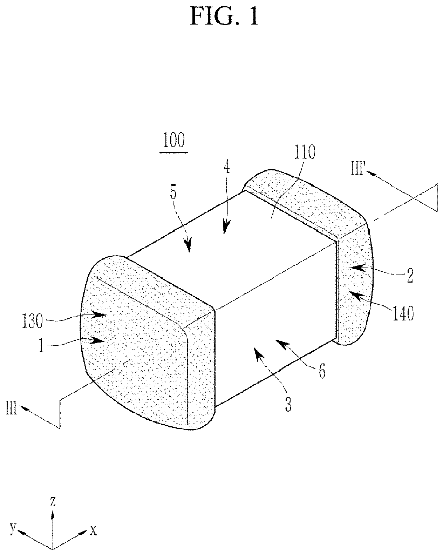

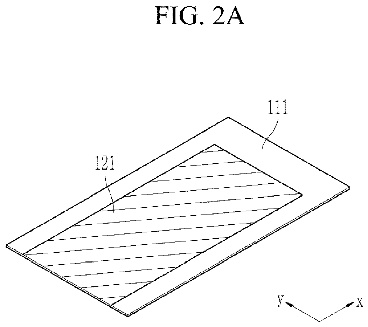

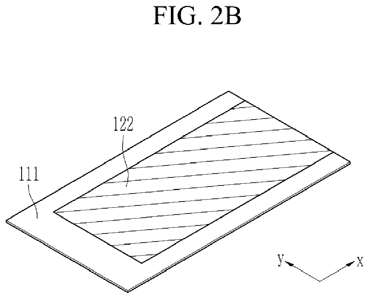

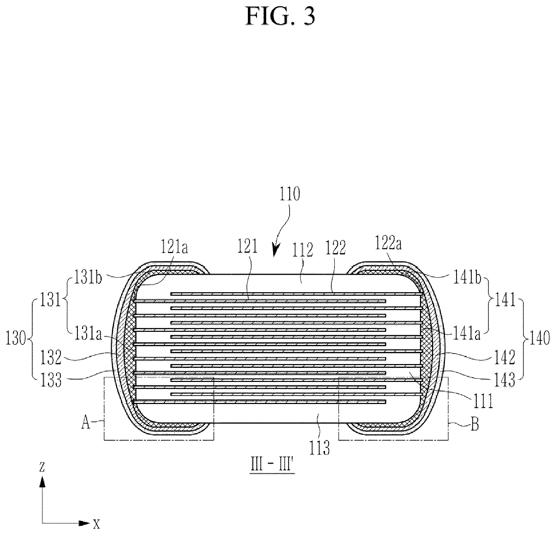

FIG. 1 is a perspective view schematically showing a multilayer capacitor according to an embodiment. FIG. 2A and FIG. 2B are exploded perspective views showing first and second internal electrodes applied to the multilayer capacitor of FIG. 1. FIG. 3 is a cross-sectional view taken along line III-III' of FIG. 1.

Referring to FIG. 1 to FIG. 5, a multilayer capacitor 100 according to the present embodiment includes the capacitor body 110 and the first and second external electrodes 130 and 140. The multilayer capacitor 100 according to the present embodiment may be a ultra-small capacitor having a thickness smaller than or equal to 150 µm. The thickness of the multilayer capacitor 100 may be a value obtained by measuring a maximum straight line distance from a point on the upper surface of the multilayer capacitor 100 to the lower surface along the z-axis direction. For example, the thickness of the multilayer capacitor 100 may be measured using a three-dimensional measuring instrument, a microscope (such as a scanning electron microscope, etc.). Other methods and/or tools appreciated by one of ordinary skill in the art, even if not described in the present disclosure, may also be used.

The capacitor body 110 is obtained by stacking a plurality of dielectric layers 111 in the z-axis direction and then firing, and the boundary between adjacent dielectric layers 111 of the capacitor body 110 may be integrated to such an extent that it is difficult to observe without a scanning electron microscope.

The capacitor body 110 may have a preset thickness in the z-axis direction, a preset length in the x-axis direction, and a preset width in the y-axis direction, and may be formed in a generally hexahedral shape in which a thickness is smaller than a width. A surface roughness of the capacitor body 110 may be in a range of 0.2 µm to 1 µm. However, the shape and size of the capacitor body 110 and the number of stacked dielectric layers 111 are not limited to those shown in the drawings of the present embodiment.

The surface roughness of the capacitor body 110 may mean an average value of roughness measured on the surface of the capacitor body 110. The average roughness (Ra) of the surface of the capacitor body 110 may be measured by measuring the depths of a plurality of grooves formed on the surface of the capacitor body 110 and then calculating the arithmetic average of these measured values. For example, the average roughness (Ra) may be measured using a micro profiler, which is a 3D measuring instrument capable of measuring roughness and surface shape, a contact roughness measuring instrument, and the like. Other methods and/or tools appreciated by one of ordinary skill in the art, even if not described in the present disclosure, may also be used.

In this embodiment, for convenience of explanation, both sides configured to face each other in an X-direction of the capacitor body 110 are referred to as first and second surfaces 1 and 2, both sides connected to the first and second surfaces 1 and 2 and configured to face each other in the z-direction are referred to as third and fourth surfaces 3 and 4, and both sides connected to the first and second surfaces 1 and 2, connected to the third and fourth surfaces 3 and 4, and configured to face each other in the y-axis direction are referred to as fifth and sixth surfaces 5 and 6. Also, in this embodiment, the mounting surface of the multilayer capacitor 100 may be the third surface 3 of the capacitor body 110.

The dielectric layer 111 may include a ceramic material having a high permittivity, for example, barium titanate (BaTiOs)-based or strontium titanate (SrTiOs)-based ceramic powder, and the like, but the present disclosure is not limited thereto.

In addition, ceramic additives, organic solvents, plasticizers, binders, and dispersants may be further added to the dielectric layer 111 along with ceramic powder. As the ceramic additive, for example, a transition metal oxide or transition metal carbide, a rare earth element, magnesium (Mg) or aluminum (Al) may be used.

The capacitor body 110 may include an active region as a portion contributing to the capacitance of the capacitor, and upper and lower covers 112 and 113 respectively formed on the upper and lower portions of the active region in the z-axis direction as upper and lower margins.

The upper and lower covers 112 and 113 may have the same material and configuration as the dielectric layer 111 except that they do not include internal electrodes.

The upper and lower covers 112 and 113 may be formed as a single dielectric layer or by stacking two or more dielectric layers on upper and lower surfaces of the active region in the z-axis direction, and basically, perform functions of preventing damage to the first and second internal electrodes 121 and 122 due to physical or chemical stress.

The first and second internal electrodes 121 and 122 are electrodes to which different polarities are applied, and are alternately arranged along the z-axis direction interposing the dielectric layer 111, and may have ends protruding from the first and second surfaces 1 and 2 of the capacitor body 110, respectively. In other words, a first internal electrode 121 may include a first end portion 121a protrude from a first end surface of the capacitor body 110 in the length direction. In addition, a second internal electrode 122 may include a second end portion 122a protrude from a second end surface of the capacitor body 110 in the length direction. First and second end portions 121a and 122a may be disposed to be offset from each other in the length direction of the capacitor body 110, to alternately protrude from both end portions in the length direction of the capacitor body 110. The first and second internal electrodes 121 and 122 may include a plurality of first and second internal electrodes 121 and 122.

The first and second internal electrodes 121 and 122 may be electrically insulated from each other by the dielectric layer 111 disposed between the first and second internal electrodes 121 and 122.

End portions of the first and second internal electrodes 121 and 122 alternately protruding through the first and second surfaces 1 and 2 of the capacitor body 110 may be connected to, and electrically connected to, the first and second external electrodes 130 and 140 disposed on the first and second surfaces 1 and 2 of the capacitor body 110, respectively. Therefore, bonding strength between the internal electrode and the external electrode may be enhanced, contact failure may be reduced, and capacity degradation of the multilayer capacitor 100 may be prevented.

According to the above configuration, when a predetermined voltage is applied to the first and second external electrodes 130 and 140, charges are accumulated between the first and second internal electrodes 121 and 122.

Here, the capacitance of the multilayer capacitor 100 is proportional to the overlapping area of the first and second internal electrodes 121 and 122 overlapping each other along the z-axis direction in the active region.

In addition, materials forming the first and second internal electrodes 121 and 122 are not particularly limited. For example, the first and second internal electrodes 121 and 122 may be formed of at least one material of nickel (Ni), copper (Cu), and a noble metal material such as platinum (Pt), palladium (Pd), palladium-silver (Pd-Ag) alloy. Here, as a method of printing the conductive paste, a screen printing method or a gravure printing method may be used, but the present disclosure is not limited thereto.

The first and second external electrodes 130 and 140 are provided with voltages of different polarities and disposed at both ends of the capacitor body 110 in the x-axis direction, and may be electrically connected to protruding portions of the first and second internal electrodes 121 and 122. For example, a first external electrode 130 is connected to and electrically connected to the first end portion 121a, and a second external electrode 140 is connected to and electrically connected the second end portion 122a.

At this time, the first external electrode 130 may include a first conductive layer 131 disposed on the surface of the capacitor body 110 and connected to the first internal electrode 121, a first internal plating layer 132 disposed to cover the first conductive layer 131, and a first external plating layer 133 disposed to cover the first internal plating layer 132. In addition, the second external electrode 140 may include a second conductive layer 141 disposed on the surface of the capacitor body 110 and connected to the second internal electrode 122, a second internal plating layer 142 disposed to cover the second conductive layer 141, and a second external plating layer 143 disposed to cover the second internal plating layer 142.

The first conductive layer 131 may include a first connection portion 131a and a first band portion 131b.

The first connection portion 131a may be located on a first surface 1 of the capacitor body 110, and connected to the protruding portion of the first internal electrode 121. Specifically, the first connection portion 131a may be connected to the first end portion 121a protruding from the first surface 1 of the capacitor body 110.

The first band portion 131b may be a portion extending from the first connection portion 131a to a portion of the third surface 3 of the capacitor body 110. Here, the first band portion 131b may further extend to a portion of the fifth and sixth surfaces 5 and 6 and a portion of the fourth surface 4 of the capacitor body 110 to improve fixation strength.

The second conductive layer 141 may include a second connection portion 141a and a second band portion 141b.

The second connection portion 141a may be located on a second surface 2 of the capacitor body 110, and connected to the protruding portion of the second internal electrode 122. Specifically, the second connection portion 141a may be connected to the second end portion 122a protruding from the second surface 2 of the capacitor body 110.

The second band portion 141b may be a portion extending from the second connection portion 141a to a portion of the third surface 3 of the capacitor body 110. Here, the second band portion 141b may further extend to a portion of the fifth and sixth surfaces 5 and 6 and the portion of the fourth surface 4 of the capacitor body 110 to improve fixation strength.

The first and second conductive layers 131 and 141 may include at least one of copper (Cu) and silver (Ag), and may further include glass, epoxy, and the like. The first and second conductive layers 131 and 141 may be formed by applying a conductive paste containing metal and firing the paste.

For example, the first and second internal plating layers 132 and 142 may be formed by including nickel (Ni) and phosphorus (P). In addition, the first and second internal plating layers 132 and 142 may be formed by plating a first metal layer including nickel and phosphorus on the first and second conductive layers 131 and 141. The first and second internal plating layers 132 and 142 may be formed by electroless plating, respectively. When the first and second internal plating layers 132 and 142 are formed by electroless plating in this way, it is possible to have better corrosion resistance than a film formed by electrolytic plating without a large difference in plating properties compared to electrolytic plating, and the plating may uniformly grow to have a uniform plating thickness regardless of locations.

In addition, whereas plating is performed by additionally inserting a dummy such as a steel ball for conduction during barrel plating in the electrolytic plating method, by using the electroless plating as in the present embodiment, it is possible to proceed with the preparation more easily for plating and the sorting of defected plating objects after plating.

For example, first and second external plating layers 133 and 143 may be formed by including palladium (Pd) and phosphorus (P). In addition, the first and second external plating layers 133 and 143 may be formed by plating, e.g., by electroless plating, a second metal layer including palladium and phosphorus on the first and second internal plating layers 132 and 142, respectively. Since the first and second external plating layers 133 and 143 serve to prevent oxidation of the nickel component of the first and second internal plating layers 132 and 142, they may be formed to be thin by using a material containing a noble metal of small oxidization. When the thickness of the first and second external plating layers 133 and 143 increases, the possibility of problems such as cracking of the plating layer may increase. When the first and second external plating layers 133 and 143 are formed by electroless plating in this way, it is possible to have better corrosion resistance than a film formed by electrolytic plating without a large difference in plating properties compared to electrolytic plating, and the plating may uniformly grow to have a uniform plating thickness regardless of locations.

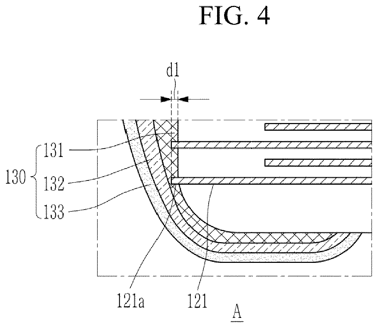

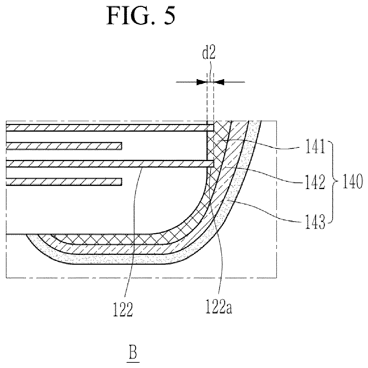

FIG. 4 is an enlarged cross-sectional view of a portion A of FIG. 3. FIG. 5 is an enlarged cross-sectional view of a portion B of FIG. 3.

Referring to FIG. 4 and FIG. 5, the first and second end portions 121a and 122a may include a plating layer containing at least one metal such as nickel (Ni), copper (Cu), tin (Sn), palladium (Pd), and the like.

The first and second end portions 121a and 122b may be formed to protrude from the capacitor body 110 by laser etching or chemical etching of both ends of the capacitor body 110.

A protruding length d1 of the first end portion 121a from the first surface 1 of the capacitor body 110 may be in a range of 0.5 µm to 5 µm. In addition, a protruding length d2 of the second end portion 122a from the second surface 2 of the capacitor body 110 may also be in a range of 0.5 µm to 5 µm.

The protruding length d1 of the first end portion 121a from the first surface 1 of the capacitor body 110 may be obtained based on lengths of plurality of line segments connecting from a location where the first end portion 121a and the first surface 1 of the capacitor body 110 are in contact to an end of the first end portion 121a along the x-axis direction in the x-z cross-section passing through the central point in the y-axis direction of the multilayer capacitor 100, specifically, as, among ten locations having equal interval along the z-axis direction, a maximum value, a minimum value, or an arithmetic mean value of the measured length values for the plurality of line segments. For example, the length of the first end portion 121a may be measured using an optical microscope, a scanning electron microscope, or the like. Other methods and/or tools appreciated by one of ordinary skill in the art, even if not described in the present disclosure, may also be used.

The protruding length d1 of the second end portion 122a from the second surface 2 of the capacitor body 110 may be obtained based on lengths of plurality of line segments connecting from a location where the second end portion 122a and the second surface 2 of the capacitor body 110 are in contact to an end of the second end portion 122a along the x-axis direction in the x-z cross-section passing through the central point in the y-axis direction of the multilayer capacitor 100, specifically, as, among ten locations having equal interval along the z-axis direction, a maximum value, a minimum value, or an arithmetic mean value of the measured length values for the plurality of line segments. For example, the length of the second end portion 122a may be measured using an optical microscope, a scanning electron microscope, or the like. Other methods and/or tools appreciated by one of ordinary skill in the art, even if not described in the present disclosure, may also be used.

When the protruding lengths d1 and d2 of the first and second end portions 121a and 122a from the end surfaces of the capacitor body 110 are less than 0.5 µm, contact failure between the first and second internal electrodes 121 and 122 and the first and second external electrodes 130 and 140 may be generated to deteriorate electrical connection, and capacity degradation of the multilayer capacitor 100 may occur. In addition, the protruding lengths d1 and d2 of the first and second end portions 121a and 122a from the end surfaces of the capacitor body 110 are less than 0.5 µm, the bonding strength between the first and second external electrodes 130 and 140 and the capacitor body 110 may be deteriorated.

The protruding lengths d1 and d2 of the first and second end portions 121a and 122a from the end surfaces of the capacitor body 110 exceed 5 µm, the first and second internal electrodes 121 and 122 may pass through the first and second conductive layers 131 and 141, and may be electrically connect to the first and second internal plating layers 132 and 142.

As described above, the protruding lengths d1 and d2 of the first and second end portions 121a and 122a from the end surfaces of the capacitor body 110 are in a range of 0.5 µm to 5 µm, electrical connection between the first and second internal electrodes 121 and 122 and the first and second external electrodes 130 and 140 may be enhanced to improve the capacitance of the multilayer capacitor 100, and the bonding strength between the first and second external electrodes 130 and 140 and the capacitor body 110 may be enhanced.

While this disclosure has been described in connection with what is presently considered to be practical embodiments, it is to be understood that the disclosure is not limited to the disclosed embodiments, but, on the contrary, is intended to cover various modifications and equivalent arrangements included within the spirit and scope of the appended claims.

**The following is a list of further preferred embodiments of the invention:**
Embodiment 1: A multilayer capacitor, comprising:
   a capacitor body comprising:
   a first internal electrode and a second internal electrode alternately stacked while being spaced apart from each other, and
   a dielectric layer interposing the first internal electrode and the second internal electrode, wherein the first internal electrode, the second internal electrode, and the dielectric layer are stacked in a first direction, and the capacitor body includes a first surface and a second surface facing the first surface in a second direction perpendicular to the first direction, and
   first and second external electrodes connected to the first internal electrode and the second internal electrode, respectively, and the first and second external electrodes are disposed on the first surface and the second surface, respectively,
   wherein the first internal electrode comprises a first end portion protruding from the first surface by 0.5 µm to 5 µm, and
   wherein the second internal electrode comprises a second end portion protruding from the second surface by 0.5 µm to 5 µm.
Embodiment 2: The multilayer capacitor of embodiment 1, wherein the first end portion and the second end portion are disposed to be offset from each other in the second direction of the capacitor body and alternately protrude from first and second surfaces of the capacitor body, respectively.
Embodiment 3: The multilayer capacitor of embodiment 1, wherein:
   a first external electrode is electrically connected to the first end portion; and
   the second external electrode is electrically connected to the second end portion.
Embodiment 4: The multilayer capacitor of embodiment 3,
   wherein the first external electrode comprises:
   a first conductive layer disposed on the first surface and connected to the first internal electrode; and
   a first internal plating layer disposed to cover the first conductive layer, and
   wherein the second external electrode comprises:
      a second conductive layer disposed on the second surface and connected to the second internal electrode; and
      a second internal plating layer disposed to cover the first conductive layer.
Embodiment 5: The multilayer capacitor of embodiment 4, wherein the capacitor body further includes a third surface and a fourth surface facing each other in the first direction,
   the first conductive layer comprises:
   a first connection portion located on the first surface and connected to the first end portion; and
   a first band portion extending to at least a portion of the third surface, and
   the second conductive layer comprises:
      a second connection portion located on the second surface and connected to the second end portion; and
      a second band portion extending to at least a portion of the third surface.
Embodiment 6: The multilayer capacitor of embodiment 4, wherein:
   the first external electrode further comprises a first external plating layer disposed to cover the first internal plating layer; and
   the second external electrode further comprises a second external plating layer disposed to cover the second internal plating layer.
Embodiment 7: The multilayer capacitor of embodiment 1, wherein the first end portion and the second end portion comprises a plating layer.
Embodiment 8: The multilayer capacitor of embodiment 7, wherein the plating layer comprises at least one of nickel (Ni), copper (Cu), tin (Sn), and palladium (Pd).
Embodiment 9: The multilayer capacitor of embodiment 1, wherein a surface roughness of the capacitor body is in a range of 0.2 µm to 1 µm.
Embodiment 10: The multilayer capacitor of embodiment 1, wherein a thickness of the capacitor body in the first direction is smaller than or equal to 150 µm.
Embodiment 11: The multilayer capacitor of embodiment 1, wherein each of the first and second internal electrodes includes a plurality of internal electrodes.
Embodiment 12: The multilayer capacitor of embodiment 1, wherein:
   the capacitor body has a preset thickness in the first direction, a preset length in the second direction, and a preset width in a third direction perpendicular to the first direction and the second direction; and
   the preset thickness of the capacitor body is smaller than the preset width.
Embodiment 13: A method of manufacturing a multilayer capacitor comprising a capacitor body comprising a first internal electrode and a second internal electrode alternately stacked while being spaced apart from each other, wherein the capacitor body includes a first surface and a second surface opposing the first surface, the method comprising:
   etching the first surface so that a first end portion of the first internal electrode protrudes from the first surface.
Embodiment 14: The method of embodiment 13, wherein the etching is laser etching.
Embodiment 15: The method of embodiment 13, wherein the etching is chemical etching.
Embodiment 16: The method of embodiment 13, further comprising:
   etching the second surface so that a second end portion of the second internal electrode protrudes from the second surface.
Embodiment 17: The method of embodiment 13, further comprising:
   applying a conductive paste including metal to the first surface and the second surface, and
   firing the conductive paste to form an external electrode.

## Claims

1. A multilayer capacitor, comprising:
a capacitor body comprising:
a first internal electrode and a second internal electrode alternately stacked while being spaced apart from each other, and
a dielectric layer interposing the first internal electrode and the second internal electrode, wherein the first internal electrode, the second internal electrode, and the dielectric layer are stacked in a first direction, and the capacitor body includes a first surface and a second surface facing the first surface in a second direction perpendicular to the first direction, and
first and second external electrodes connected to the first internal electrode and the second internal electrode, respectively, and the first and second external electrodes are disposed on the first surface and the second surface, respectively,
wherein the first internal electrode comprises a first end portion protruding from the first surface by 0.5 µm to 5 µm, and
wherein the second internal electrode comprises a second end portion protruding from the second surface by 0.5 µm to 5 µm.

2. The multilayer capacitor of claim 1, wherein the first end portion and the second end portion are disposed to be offset from each other in the second direction of the capacitor body and alternately protrude from first and second surfaces of the capacitor body, respectively.

3. The multilayer capacitor of claim 1 or 2, wherein:
a first external electrode is electrically connected to the first end portion; and
the second external electrode is electrically connected to the second end portion.

4. The multilayer capacitor of claim 3,
wherein the first external electrode comprises:
a first conductive layer disposed on the first surface and connected to the first internal electrode; and
a first internal plating layer disposed to cover the first conductive layer, and
wherein the second external electrode comprises:
a second conductive layer disposed on the second surface and connected to the second internal electrode; and
a second internal plating layer disposed to cover the first conductive layer.

5. The multilayer capacitor of claim 4, wherein the capacitor body further includes a third surface and a fourth surface facing each other in the first direction,
the first conductive layer comprises:
a first connection portion located on the first surface and connected to the first end portion; and
a first band portion extending to at least a portion of the third surface, and
the second conductive layer comprises:
a second connection portion located on the second surface and connected to the second end portion; and
a second band portion extending to at least a portion of the third surface.

6. The multilayer capacitor of claim 4, wherein:
the first external electrode further comprises a first external plating layer disposed to cover the first internal plating layer; and
the second external electrode further comprises a second external plating layer disposed to cover the second internal plating layer.

7. The multilayer capacitor of claim 1, wherein the first end portion and the second end portion comprises a plating layer.

8. The multilayer capacitor of claim 7, wherein the plating layer comprises at least one of nickel (Ni), copper (Cu), tin (Sn), and palladium (Pd).

9. The multilayer capacitor of one of claims 1 to 8, wherein a surface roughness of the capacitor body is in a range of 0.2 µm to 1 µm.

10. The multilayer capacitor of one of claims 1 to 9, wherein a thickness of the capacitor body in the first direction is smaller than or equal to 150 µm.

11. The multilayer capacitor of one of claims 1 to 10, wherein each of the first and second internal electrodes includes a plurality of internal electrodes.

12. The multilayer capacitor of one of claims 1 to 11, wherein:
the capacitor body has a preset thickness in the first direction, a preset length in the second direction, and a preset width in a third direction perpendicular to the first direction and the second direction; and
the preset thickness of the capacitor body is smaller than the preset width.

13. A method of manufacturing a multilayer capacitor comprising a capacitor body comprising a first internal electrode and a second internal electrode alternately stacked while being spaced apart from each other, wherein the capacitor body includes a first surface and a second surface opposing the first surface, the method comprising:
etching the first surface so that a first end portion of the first internal electrode protrudes from the first surface.

14. The method of claim 13, wherein the etching is laser etching; or
wherein the etching is chemical etching; or
further comprising:
etching the second surface so that a second end portion of the second internal electrode protrudes from the second surface.

15. The method of claim 13, further comprising:
applying a conductive paste including metal to the first surface and the second surface, and
firing the conductive paste to form an external electrode.
